# EUROPÄISCHE PATENTSCHRIFT

(11) **EP 2 028 166 B1**
(45) Veröffentlichungstag und Bekanntmachung des Hinweises auf die Patenterteilung: **02.12.2009**
(21) Anmeldenummer: 08013592.4
(22) Anmeldetag: 29.07.2008
(51) Int. Cl.: C03C 3/095, C03C 13/02, C03C 25/26

(54) **Thermischbeständige Glasfasern**
Thermal resistant glass fibres
Fibres de verre à résistance thermique

(30) Priorität: 03.08.2007 DE 102007036774
(43) Veröffentlichungstag der Anmeldung: 25.02.2009
(73) Patentinhaber: S.D.R. Biotec Verfahrenstechnik GmbH, 04509 Neukyhna/OT Pohritzsch (DE)
(72) Erfinder: Teschner, Roman, Dr., 04509 Delitzsch (DE); Richter, Kati, 04509 Delitzsch/OT Pohritzsch (DE); Richter, Hans-Peter, Dr., 04509 Delitzsch/OT Pohritzsch (DE)
(74) Vertreter: Müller, Volkmar

(56) Entgegenhaltungen:
- WO-A-2006/064164
- WO-A-2007/055968
- FR-A- 2 864 072
- GB-A- 2 077 311

## Beschreibung

Für die Festigkeiten von Verbundwerkstoffen, wie z.B. High-Tech-Sandwich-Bauteile, GFK, ist die Qualität des Glases und damit der Glasfasern, die zur Verstärkung der Composite eingesetzt werden, von sehr großer Bedeutung. Die Glasfasern unterscheiden sich in ihren physikalisch-chemischen Merkmalen gravierend voneinander. Für anspruchsvolle Verbundwerkstoffe werden nur Glasfasern, die sehr gute physikalisch-chemische Eigenschaften aufweisen, eingesetzt. Die chemische Zusammensetzung der Glasfasern ist in der Tabelle 1 zu sehen.

**Tabelle 1. Zusammensetzung der Glasfasern.**

| Oxide | Oxide in Ma -% | | | | |
|---|---|---|---|---|---|
| | E-Glas | R-Glas | ECR- Glass | Advantex ^{®} | S-Glas |
| SiO₂ | 55,0 | 60,0 | 58,4 | 61,0 | 64,7 |
| Al₂O₃ | 14,0 | 24,4 | 11,1 | 13,0 | 25,0 |
| TiO₂ | 0,2 | - | 2,4 | - | - |
| B₂O₃ | 7,0 | - | - | - | - |
| CaO | 22,0 | 9,0 | 21,4 | 22,5 | - |
| MgO | 1,0 | 6,0 | 2,7 | 3,0 | 10,0 |
| ZnO | - | - | 2,7 | - | - |
| Na₂O | 0,5 | 0,5 | 0,8 | - | 0,3 |
| K₂O | 0,3 | 0,1 | 0,1 | 0,5 | - |

E-Glas (E=Elecric) ist ein Aluminium-Borosilikatglas mit einem geringen Anteil an Alkalioxiden (< 2 Ma.-%) und guten Elektroisolationseigenschaften.
   Die E-Glasfasern sind besonders gut geeignet für die Herstellung von gedruckten Schaltungen und für die Kunststoffverstärkung. Die thermische Beständigkeit eines E-Glases (wird durch die Transformationstemperatur definiert), ist unzufriedenstellend und liegt unter 680⁰ C.
   Ein großer Nachteil der E-Gläser ist ihre niedrige Säurebeständigkeit (Säurebeständigkeit Klasse 4). Diese E-Gläser werden unter anderem in Patentschriften US 3 876 481; US 3 847 627; US 2 334 961; US 2 571 074; US 4 026 715; US 3 929 497; US 5 702 498; EP 0761 619 A1; US 4 199 364 und in US 3 095 311 beschrieben.
R-Glas (R= Resistance) ist ein Erdalkali-Aluminium-Silikatglas. Die Transformationstemperatur und der Softening Point dieses Glases betragen entsprechend ca. 730^{0C} bzw. ca. 950⁰ C. Ähnliche Gläser, wie z.B. "Supremax"-Glas, kommen wegen ihrem niedrigen Ausdehnungskoeffizienten als Thermometerglas zum Einsatz.
   Die R-Glasfasern werden in Anwendungsbereichen, mit hohen mechanische und thermische Anforderungen, eingesetzt. Die R-Glasfasern weisen auch bei erhöhter Temperatur eine ziemlich hohe Zugfestigkeit auf.
Ein ECR-Glas (ECR= E-Glass Corrosion Resistance), beispielsweise beschrieben in DE 69607614 T2, ist ein borfreies Aluminium-Kalksilikatglas mit einem niedrigem Anteil an Alkalioxiden. Die ECR-Glasfasern weisen hohe Säurebeständigkeit und gute mechanische und elektrische Eigenschaften auf.
   Sie werden für anspruchsvolle Kunststoffverstärkung eingesetzt.
Advantex^{®}-Glas, beschrieben in US 5 789 329, stellt eine Modifikation des ECR-Glases mit einem sehr geringen Anteil an Alkalioxiden und verbesserten physikalisch-chemischen Eigenschaften dar. Die langzeitige Temperaturbeständigkeit dieser Faserart liegt bei ca. 740° C.
S-Glas (S= Strength) ist ein Magnesium-Aluminiumsilikatglas. Es wurde als Spezialglas für hohe mechanische Anforderungen, insbesondere bei erhöhter Temperatur, entwickelt (u. a. WO 02/042233 A3) und enthält mehr als 10 Mol% Al₂O₃. Andere Hochtemperaturgläser wurden unter anderem in US 2 571 074 in US 3 847 627 und in US 4 542 106 beschrieben.

Die Eigenschaften der besten Glasfasertypen im Vergleich mit E-Glas sind aus der Tabelle 2 zu ersehen.

**Tabelle 2: Eigenschaften ausgewählter Glasfasern**

| Eigenschaften | Glasfasern | | | | |
|---|---|---|---|---|---|
| | E-Glas | R-Glas | ECR-Glass | Advantex^{®} | S-Glas |
| Dichte [kg/m³] | 2620 | 2550 | 2670 | 2620 | 2480 |
| Ausdehnungskoeffizient [K⁻¹] | 5,4·10⁻⁶ | 4,1·10⁻⁶ | 5,9·10⁻⁶ | 6,0·10⁻⁶ | 2,0·10⁻⁶ |
| Viskosität: | | | | | |
| - Erweichungspunkt [⁰C] | 850 | 950 | 880 | 915 | 1050 |
| Zugfestigkeit [MPa] | 3450 | 3400 | 3450 | 3500 | 4890 |
| E-Modul [GPa] | 72,0 | 85,0 | 72,0 | 81,0 | 87,0 |
| Dehnung [%] | 4,8 | 4,6 | 4,8 | 4,6 | 5,7 |
| Permittivitätszahl bei 1 MHz | 6,6 | 6,0 | 6,9 | 6,8 | 5,3 |

Wie das aus der Tabelle 2 hervorgeht, weisen die S-Glasfasern die vergleichsweise besten mechanischen Eigenschaften auf. Auch die chemische und thermische Beständigkeit dieser Fasern ist sehr gut.
Das herkömmliche S-Glas ist ein Magnesium-Aluminiumsilicatglas, das als Spezialglas für hohe mechanische Anforderungen, insbesondere bei erhöhter Temperatur, entwickelt wurde.
Die Gläser des ternären Systems MgO- Al₂O₃-SiO₂ erstarren zwar leicht glasig, diese neigen aber bei einer thermischen Nachbehandlung zur Kristallisation und zur Phasentrennung.

Wenn die S-Gläser einer Temperatureinwirkung unterzogen werden, kommt es zur Ausscheidung einer MgO- und Al₂O₃- reichen Silikatglas-Tröpfchenphase und zur Kristallisation. Dies stellt einen großen Nachteil des herkömmlichen S-Glases und der daraus hergestellten Produkte dar.
In dem ternären MgO- Al₂O₃-SiO₂ - System können unter anderem Mullit 3Al₂O₃·2SiO₂, Forsterit 2MgO·SiO₂, Spinell MgO·Al₂O₃, Cordierit 2MgO·2Al₂O₃·5SiO₂ und Periklas MgO kristallisieren.

Die Phasentrennung und die Kristallisationsprozesse führen zu einer starken Abnahme der Faserfestigkeit, zur Versprödung und zur Zerstörung der Fasern (Querfragmentierung). Auch die Temperaturwechselbeständigkeit der S-Glasfasern sind nicht zufrieden stellend. Ein anderer großer Nachteil der S-Glasfasern ist der relativ sehr hohe Preis. Darüber hinaus findet diese Fasersorte zweckmäßigerweise nur in wenigen Bereichen ihren Einsatz.

Eine andere Faserart, die für anspruchsvolle Kunststoffverstärkung eingesetzt wird, ist eine Glasfaser aus dem borfreien Advantex® -Glas.
Advantex® -Glasfasern weisen zwar im Vergleich mit S-Glas niedrigere Festigkeiten und eine niedrigere thermische Beständigkeit auf, aber ihre Kristallisationsneigung ist vergleichsweise sehr gering.

Zum Herstellen von Glasfasern wird das Glas nach vorgegebener Gemengezusammensetzung im Schmelzofen geschmolzen. Die Glasschmelze wird über einen Durchlass und einen Speiserkanal (Feeder) den Bushings zugeführt.
Ein Bushing, der regelmäßig aus einer Edelmetalllegierung (meistens Pt/Rh-Legierung) angefertigt wird, stellt eine Zerfaserungseinheit, in der der eigentliche Spinnprozess stattfindet, dar. Ein Bushing ist mit zahlreichen Düsen (Tips) versehen, aus denen Einzelfilamente gezogen und etwaige gebündelt werden.
Die Qualität der Glasschmelze ist für den Spinnprozess grundsätzlich von entscheidender Bedeutung. Im Faserziehprozess darf nur eine vollhomogene Schmelze ohne glastechnische Fabrikationsfehler verarbeitet werden. Die Anwesenheit von Steinchen, Gipsen u. a. in der Schmelze beeinflusst den Spinnprozess negativ oder verhindert ihn durch zahlreiche Fadenheißbrüche gänzlich.
Der Spinnprozess kann nur in einem bestimmten Temperaturbereich (zwischen der so genannten unteren und oberen Temperaturgrenze) durchgeführt werden, wobei die optimale Stabilität des Spinnprozesses bei log η ≈ 3,0 (η in dPas) erreicht wird.
An der unteren Temperaturgrenze des Faserziehvorganges nimmt der Massenstrom in den Düsen mit steigender Viskosität ab. Die Spannungen in der Ziehzwiebel, die durch die hohe Ziehkraft verursacht werden, nehmen stark zu. Infolge der hohen Zugspannung beim Faserziehen an der unteren Temperaturgrenze werden in den Filamenten bestimmte Deformationen und Schwachstellen im Netzwerk "eingefroren". Dies führt insbesondere zu einer starken Absenkung der Faserfestigkeit und zur Beeinträchtigung des Spinnprozesses. Die hohe Fadenziehkraft bei einer hochviskosen Glasschmelze und der hydraulische Druck der Schmelze im Bushing können eine Deformierung des Düsenbodens hervorrufen. Beim Faserziehen an der unteren Temperaturgrenze dauert der Wiederanspinnvorgang nach einem Heißbruch länger, was sich negativ auf den Wirkungsgrad der Glasfaserherstellung auswirkt.

Bei der Spinnprozessführung an der oberen Temperaturgrenze wird der Düsenrand (Stirnfläche der Düse) stark benetzt. Dadurch entsteht in der Ziehzwiebel eine gewisse "Totzone" der Strömung mit längerer Verweilzeit der Glasschmelze und es besteht die Gefahr einer Keimbildung. Mit steigender Ziehprozesstemperatur wird die Ziehzwiebel vergrößert und die Abkühlzeit verlängert. Infolge dessen wird der Angriff von Staubteilchen, Wasserdampf und reaktiven Gasen begünstigt. Dies führt insbesondere zur Abnahme der Festigkeit, vor allem dann, wenn der Spinnprozess bei sehr hoher Luftfeuchte durchgeführt wird.
Beim Faserziehen an bzw. beim Überschreiten der oberen Temperaturgrenze wird der Spinnprozess destabilisiert. Schon kleine Störungen an der Ziehtrommel (wie z.B. Vibrationen oder Schwingungen) rufen oft eine Oszillation an der Ziehzwiebel hervor, was zu einem schnellen Heißbruch der Faser führen kann. Eine Erhöhung der Glasoberflächenspannung wirkt stabilisierend auf den Spinnprozess. Dadurch kann die Ziehgeschwindigkeit, im Vergleich mit einem Glas mit niedriger Oberflächenspannung, erhöht werden. Die Oberflächenspannung der Glasschmelze kann auch durch eine Änderung der Glaszusammensetzung beeinflusst werden.

Im technologischen Prozess der Glasfaserherstellung ist u. a. die Faserkühlung von wesentlicher Bedeutung. Die gezogenen Glasfasern müssen sehr schnell auf einer Strecke von ca. 30 mm von der Spinntemperatur bis unter die Glastransformationstemperatur abgekühlt werden. Dabei beträgt die Abkühlgeschwindigkeit beispielsweise ca. 200°C/cm (20000°C/m) bzw. ca. 1000°C/ms. Je schneller und intensiver die Abkühlung desto leichter kann der glasige Zustand "eingefroren" werden und desto besser sind die mechanischen Eigenschaften der Glasfasern. Darüber hinaus müssen die gezogenen Glasfasern im Ziehzwiebelbereich und unter der Ziehzwiebel mit Hilfe von Kühlkämmen (Fin-Coolers) bzw. mittels Kühlröhrchen (Cooling Tubes) intensiv gekühlt werden. Um den Kühlprozess der Glasfasern zu intensivieren, werden beispielsweise unter dem Bushing zusätzlich Wassersprühdüsen installiert. Das auf die Glasfilamente aufgesprühte Wasser dient nicht nur der Kühlung, sondern u. a. auch der Reduzierung der statischen Aufladung der Fasern.

Im Indirectmelt-Verfahren wird oft ein Spinnhilfsmittel (beispielsweise Glycole oder Polyglycole) eingesetzt. Das Spinnhilfsmittel wird als Gasphase in den Ziehzwiebel-und Faserbildungsbereich gelenkt. Außer der Faserkühlung dient das Spinnhilfsmittel der Erhöhung der Oberflächenspannung an der Ziehzwiebel, verhindert bzw. reduziert gravierend die statische Aufladung der Filamente und bildet den ersten Schutz für die jungfräuliche Glasfaseroberfläche.
Eine nicht ausreichende und/oder ungleichmäßige Faserkühlung beeinträchtigt die Bushingslaufeigenschaften und folglich die Qualität der gezogenen Glasfasern.

Die Patentschriften FR 2864072 und GB 2077311 beschreiben Glasfasern mit einer wässrigen Schlichte auf der Basis von Polyvinylacetat, Vinylacetat-Copolymeren und Epoxidharzen.

Der Erfindung liegt die Aufgabe zugrunde, neue Textilglasfasern zur entwickeln und dem Markt anzubieten, die die Unzulänglichkeiten bekannter textilen Faser nicht aufweisen und eine sehr gute thermische Stabilität aufweisen. Diese neue Faserart darf durch eine Langzeittemperatureinwirkung keine starke Kristallisationsneigung, die die mechanischen Eigenschaften negativ beeinträchtigen, aufweisen. Dabei sollen die Glasfaserherstellkosten, im Vergleich zu ähnlichen Faserarten, erheblich reduziert werden, ohne dabei die physikalisch-chemischen Glaseigenschaften negativ zu beeinflussen.
Durch die neue Faserart soll außerdem die Effizienz der Glasfaserproduktion als industrielle Massenproduktion gesteigert werden.

Die Aufgabe der Erfindung liegt weiterhin darin, neue Fasern zu entwickeln, die nicht nur hervorragende physikalisch-chemische Eigenschaften aufweisen, sondern auch dazu beitragen, die mechanischen Eigenschaften der hergestellten Verbundmaterialien, die diese neuen Fasern enthalten, wesentlich zu verbessern. Dabei sollen die Glasfasern sowohl eine niedrige Dichte als auch eine hohe Zugfestigkeit und Dehnung aufweisen. Die neuen Fasern sollen eine sehr gute Temperaturwechselbeständigkeit und eine niedrige Knickempfindlichkeit besitzen.
Die thermische Beständigkeit der Glasfilamente soll insbesondere mehr als ca. 750 ⁰C betragen.

Das Glas aus dem die Fasern hergestellt werden, sollte folgende chemische Beständigkeit aufweisen:
- hydrolytische Beständigkeit Klasse 1 (< 0,1 cm³ 0,01N HCl)
- Säurebeständigkeit Klasse 1 (< 0,7 mg/dm²)
- Laugenbeständigkeit ≤ Klasse 2 (< 175 mg/dm²).

Die Aufgabe der Erfindung wird durch die Merkmale des Anspruchs 1 gelöst.

Die Unteransprüche 2 bis 8 zeigen vorteilhafte Ausgestaltungen der erfindungsgemäßen thermischbeständigen Glasfasern auf, ohne diese abschließend zu beschreiben.

Notwendige Glaseigenschaften für eine thermischbeständige Glasfaser sind im Sinne der Erfindung insbesondere:
- eine hohe chemische Beständigkeit:

| | |
|---|---|
| hydrolytische Beständigkeit | Klasse 1 (< 0,1 cm³ 0,01N HCl) |
| Säurebeständigkeit | Klasse 1 (< 0,7 mg/dm²) |
| Laugenbeständigkeit | ≤ Klasse 2 (< 175 mg/dm²). |

- eine thermische Beständigkeit, insbesondere eine Temperaturbeständigkeit > 750°C,
- niedrige Zugfestigkeitsverluste, von insbesondere < 50%, infolge einer Temperatur von insbesondere > 750°C über zumindest 24 Stunden,
- gute dielektrische Eigenschaften, nämlich eine Permittivitätszahl bei 1 MHz höchstens 6,5,
- hohe Temperaturwechselbeständigkeit, nämlich zumindest keine Querfragmentierung der 10 µm-Faser bei einer Abschreckung von 300°C auf Raumtemperatur.

In den zahlreichen durchgeführten Versuchen und Tests hat sich überraschenderweise herausgestellt, dass insbesondere diese notwendigen Glasfasereigenschaften erreicht werden, wenn sie aus einem Glas mit folgender Zusammensetzung hergestellt werden:

| | | | | | |
|---|---|---|---|---|---|
| SiO₂ | - | 62,0 | bis | 66,0 | Ma.-% |
| Al₂O₃ | - | 14,0 | bis | 16,4 | " |
| TiO₂ | - | 0,8 | bis | 1,2 | " |
| CaO | - | 10,0 | bis | 12,0 | " |
| MgO | - | 4,0 | bis | 6,0 | " |
| ZnO | - | 0,8 | bis | 1,5 | " |
| Na₂O+K₂O+Li₂O | - | 0,2 | bis | 0,6 | " |
| CeO₂ | - | 0,2 | bis | 0,5 | " |
| TeO₂+HfO₂+La₂O₃ | - | | unter | 0,5 | " |

Bei dieser Glaszusammensetzung sind die physikalisch-chemischen Glasfasereigenschaften besonders gut ausgeprägt.

Nach einer bevorzugten Auslegung des erfindungsgemäßen Glases weist dieses folgende Zusammensetzung auf:

| | | | |
|---|---|---|---|
| SiO₂ | - | 64,6 | Ma.-% |
| Al₂O₃ | - | 16,0 | " |
| TiO₂ | - | 1,0 | " |
| Fe₂O₃ | - | 0,1 | " |
| CaO | - | 11,2 | " |
| MgO | - | 4,8 | " |
| ZnO | - | 1,2 | " |
| Na₂O+K₂O+Li₂O | - | 0,5 | " |
| CeO₂ | - | 0,3 | " |
| TeO₂+HfO₂+La₂O₃ - 0,3 | - | 0,3 | " |

Die Aufgabe der Erfindung wird außerdem durch ein Verfahren zum Beschlichten einer erfindungsgemäßen thermischbeständigen Glasfaser mit den Merkmalen des Anspruchs 9 gelöst.

Die Unteransprüche 10 bis 12 zeigen vorteilhafte Ausgestaltungen der erfindungsgemäßen thermischbeständigen Glasfasern auf, ohne diese abschließend zu beschreiben.

Die Aufgabe der Erfindung wird außerdem durch eine beschlichtete Glasfaser gemäß den Merkmalen des Anspruchs 13 gelöst.

### Beispiel 1

In einer Laborschmelzvorrichtung wurde ein Glas mit folgender Zusammensetzung hergestellt:

| | | | |
|---|---|---|---|
| SiO₂ | - | 64,6 | Ma.-% |
| Al₂O₃ | - | 16,0 | " |
| TiO₂ | - | 1,0 | " |
| Fe₂O₃ | - | 0,1 | " |
| CaO | - | 11,2 | " |
| MgO | - | 4,8 | " |
| ZnO | - | 1,2 | " |
| Na₂O+K₂O+Li₂O | - | 0,5 | " |
| CeO₂ | - | 0,3 | " |
| TeO₂+HfO₂+La₂O₃ | - | 0,3 | " |

Die Transformationstemperatur des neuen Glases betrug 770⁰ C und die Erweichungstemperatur lag bei 972⁰ C. Der Fiberising Point als log η=3 definiert (η-Viskosität in dPas) lag bei ca. 1400⁰ C. Die aus der Schmelze gezogenen und mit der erfindungsgemäßen Sizing beschlichteten Rovingfasern, wiesen eine Zugfestigkeit der Enzelfilamente von 4000 MPa auf.

Bei den Untersuchungen der neuen Faserart hat sich überraschenderweise herausgestellt, dass die aus der erfindungsgemäßen Glaszusammensetzung hergestellten Fasern im Vergleich mit den allgemein bekannten Hochtemperaturfasern, wie z.B. R-, ECR-, Advantex-Glasfasern, ein hervorragendes Zugdehnungsverhalten aufweisen.
Die Dehnung der erfindungsgemäßen Fasern betrug 5 %.

Die aus diesem Glas hergestellten Fasern müssen mit einer speziellen Schlichte (Sizing) versehen werden, damit ihre sehr guten physikalisch-chemische Eigenschaften im Verbund mit Harz (Composits) besonders gut ausgeprägt sind. Nur die mit der Polymermatrix kompatiblen Glasfasern gewährleisten hervorragende physikalisch-chemische Eigenschaften des verstärkten Kunststoffes (GFK).

In zahlreichen Versuchen hat sich gezeigt, dass die sehr gute mechanische Eigenschaften der Fasern und der daraus hergestellten Composits besonders gut ausgeprägt sind, wenn die erfindungsgemäßen Fasern mit einer Schlichte, bestehend aus: zur Herstellung von Rovingfasern bestehend aus:

| | | |
|---|---|---|
| a) | 2,0 - 4,0 Ma.-% | Polyvinylacetat-Ethylencopolymer |
| b) | 0,3 - 0,7 Ma.-% | Polyamidoamid |
| c) | 0,1 - 0,3 Ma.-% | Polyvinylalkohol-Polyether-Mischung |
| d) | 0,1 - 0,3 Ma.-% | Polyolefinwachs |
| e) | 0,4 - 0,7 Ma.-% | Haftvermittler und |
| f) | Wasser als Rest auf 100 Ma.-% versehen werden. | |

Diese Eigenschaften sind insbesondere:

| | | |
|---|---|---|
| Bezüglich der Faser: | Zugfestigkeit: | 4000 MPa |
| | Dehnung: | 5% (+/- 0,2%) |
| | Zugfestigkeitsverlust nach 24 h bei 600°C: | 50% |
| | E-Modul: | 84 MPa |

Bezüglich des Composits mit Polyester:

| | |
|---|---|
| Zugfestigkeit im Vergleich mit E-Glas: | ca. + 10% |
| Nach 3 Tagen Exposition im siedenden Wasser im Vergleich mit E-Glas: | ca. + 6%. |

Die damit beschlichteten Glasfasern zeichnet hervorragende Integrität, Elastizität und eine im Vergleich mit ähnlichen Fasertypen wie z.B. R- oder Advantex^{®}-Glas sehr gute Zugfestigkeit (ca. 4000 MPa) und hervorragende
Dehnung (5 %) aus. Im Webprozess gewährleisten die neuen Fasern eine ausgezeichnete Schiebefestigkeit und Verschneidbarkeit der Kett- und Schussfäden. Durch eine besonders gute Kompatibilität, weisen die mit diesen Fasern hergestellten Verbundwerkstoffe ausgezeichnete Festigkeiten auf.

Für Epoxidharzsysteme (Epoxidharzmatrix) kann zur Beschlichtung der Glasfasern ein Sizing (PF1) mit folgender chemischen Zusammensetzung angewendet werden:

### Sizing PF1

| | |
|---|---|
| 1.) CH₃COOH (60%) | - 0,25 Ma.-% |
| 2.) Appretan 3588 (55%) | - 3,00 Ma.-% |
| 3.) Albosize GL (12,5%) | - 1,60 Ma.-% |
| 4.) Arkofil CS (20%) | - 1,00 Ma.-% |
| 5.) Polypropylenwachs PP-W (30%) | - 0,40 Ma.-% |
| 6.) A1100 | - 0,50 Ma.-% |
| 7.) Wasser | - 93,25 Ma.-% |

Der Mixvorgang für die Schlichte ist wie folgt:

### Verfahrensweise - Mixvorgang 100 kg

1.) 60 kg Wasser + 240 g Essigsäure [CH₃COOH (60%)] werden vorgelegt.
2.) 0,5 kg γ-Aminopropyltriethoxysilan (A-1100) wird mit 5,0 kg entionisiertem Wasser +10 g [CH₃COOH (60%)] hydrolysiert. Die Hydrolysedauer beträgt ca. 15 min.
3.) Zugabe der Hydrolysatlösung A-1100.
4.) 3,0 kg Vinylacetatethylencopolymer [Appretan 3588 (55%)], aufgerührt mit 10 kg Wasser, wird dem Ansatz zugegeben.
5.) 1,6 kg Polyamidoamid [Albosize GL (12,5%)] wird dem Ansatz zugesetzt.
6.) 1,0 kg Polyvinylalkohol-Polyether [Arkofil CS (20%)] wird mit 6,0 kg Wasser verdünnt und dem Ansatz zugegeben.
7.) 0,4 kg Polypropylenwachsdispersion PP-W (30%) wird dem Ansatz zugesetzt.
8.) Zugabe der restlichen Wassermenge (12,25 kg) + 1-2 g des Entschäumers (Surfynol 440).
9.) Rühren der Schlichte und pH-Wertbestimmung.

Für ungesättigte Polyesterharze kommt Beispielsweise eine Schlichte (PF 12) mit folgender Zusammensetzung zum Einsatz:

### Sizing PF12

| | | |
|---|---|---|
| 1.) CH₃COOH (60%) | - 0,20 | Ma.-% |
| 2.) Appretan 3588 (55%) | - 2,80 | Ma.-% |
| 3.) Albosize GL (12,5%) | - 2,00 | Ma.-% |
| 4.) Arkofil CS20 (20%) | - 2,00 | Ma.-% |
| 5.) Wachs Michem 42035(35%) | - 0,30 | Ma.-% |
| 6.) A 174 | - 0,50 | Ma.-% |
| 7.) Wasser | - 92,20 | Ma.-% |

Der Mixvorgang für die Schlichte ist wie folgt:

### Verfahrensweise - Mixvorgang 100 kg

1. 55 kg Wasser + 180 g CH₃COOH (60%) werden vorgelegt.
2. 0,5 kg γ-Methacryloxypropyltrimethoxysilan (A 174) + 20 g CH₃COOH (60%) wird mit 3,5 kg heißem entionisiertem Wasser hydrolysiert.
   Die Hydrolysedauer beträgt ca. 20 min.
3. Zugabe der Hydrolysatlösung A 174.
4. 2,8 kg Polyvinylacetat-Ethylen-Dispersion (Appretan 3588 - 55%) aufgerührt mit 10 kg Wasser wird dem Ansatz zugegeben.
5. 2,0 kg Polyvinylalkohol-Polyether (Arkofil CS20-20%) wird dem Ansatz zugesetzt.
6. 2,0 kg Polyamidoamid (Albosize) wird dem Ansatz zugesetzt.
7. 0,3 kg Polyolefinwachs (Michem 42035)wird dem Ansatz zugegeben.
8. Zugabe der restlichen Wassermenge (23,7kg) + ca. 1g Entschäumers [Surfynol 440 ].
9. Rühren der Schlichte und pH-Wertbestimmung.

Die Schlichten dessen Festkörperkonzentration bei ca. 2,8 Ma.-% liegt, gewährleisten eine sehr gute Faserbenetzung durch die Verbesserung der Affinität zur Kunststoffmatrix und tragen damit entscheidend zu sehr guten Festigkeit des Endproduktes (Composits) bei.

### Beispiel 2

Im Labor wurde ein Glas mit folgender Zusammensetzung erschmolzen:

| | | | |
|---|---|---|---|
| SiO₂ | - | 65,0 | Ma.-% |
| Al₂O₃ | - | 15,6 | Ma.-% |
| TiO₂ | - | 1,0 | " |
| Fe₂O₃ | - | 0,1 | " |
| CaO | - | 11,0 | " |
| MgO | - | 5,0 | " |
| ZnO | - | 1,0 | " |
| Na₂O+K₂O+Li₂O | - | 0,5 | " |
| CeO₂ | - | 0,4 | " |
| TeO₂+HfO₂+La₂O₃ | - | 0,4 | Ma.-%. |

Die wichtigsten Fix-Punkte des o/a erfindungsgemäßen Glases betragen:

| | |
|---|---|
| Transformationstemperatur | 768° C |
| Erweichungstemperatur | 970° C |
| Fiberisingtemperatur | 1400° C. |

Fiberising point (log n=3) = Fiberisingtemperatur = Zerfaserungstemperatur

Die hydrolytische Beständigkeit des Glases beträgt 0,03 cm³ 0,01N HCl und liegt in der Klasse 2. Auch die Säurebeständigkeit(mit einer Abtragung von weniger als 0,7 mg/ dm²) des Glases liegt in der Klasse 1. Die Lagerbeständigkeit (mit einem Masseverlust von 102 mg/ dm²) entspricht der Klasse 2. Die aus diesem Glas gezogenen Filamente mit einem Durchmesser von 10 µm weisen eine Zugfestigkeit von 3800 MPa auf. Die bei dem Zugversuch ermittelte Dehnung lag bei 5%.
Die Filamente wurden mit Schlichte PF1 beschichtet.

### Beispiel 3

In einer Laborschmelzvorrichtung wurde ein erfindungsgemäßes Glas mit folgender Zusammensetzung hergestellt:

| | | | |
|---|---|---|---|
| SiO₂ | - | 64,2 | Ma.-% |
| Al₂O₃ | - | 16,2 | " |
| TiO₂ | - | 1,0 | " |
| Fe₂O₃ | - | 0,1 | " |
| CaO | - | 11,6 | " |
| MgO | - | 4,6 | " |
| ZnO | - | 1,2 | " |
| Na₂O+K₂O+Li₂O | - | 0,5 | " |
| CeO₂ | - | 0,3 | " |
| TeO₂+HfO₂+La₂O₃ - 0,3 | - | 0,3 | " |

Das Glas weist folgende Fix-Punkte auf:

| | |
|---|---|
| Transformationstemperatur | 775° C |
| Erweichungstemperatur | 975° C |
| Fiberisingtemperatur | 1390° C. |

Die hydrolytische Beständigkeit des Glases beträgt 0,05 cm³ 0,01N HCl und liegt in der Klasse 1 (gemäß DIN ISO 719). Auch die Säurebeständigkeit(mit einem Wert von weniger als 0,7 mg/ dm² bzw. mit einer Alkaliabgabe von 10 µg/ dm²) liegt in der Klasse 1. Die ermittelte Laugenbeständigkeit qualifiziert das Glas in die Beständigkeitsklasse 2 (Massenverlust = 100 mg/ dm²).

Aus dem erfindungsgemäßen Glas wurden Glasfasern gezogen und während des Ziehvorganges beschlichtet. Als Schlichte wurde PF12 eingesetzt.
Der Faserdurchmesser betrug 10 µm. Die ermittelte Zugfestigkeit der Einzelfilamente lag bei 4200 MPa. Die Dehnung betrug 5,0%.

## Patentansprüche

1. Thermischbeständige Glasfasern, **dadurch gekennzeichnet, dass** diese zumindest
| | | | | |
|---|---|---|---|---|
| 62,0 | bis | 66,0 | Ma.-% | - SiO₂ |
| 14,0 | bis | 16,4 | " | - Al₂O₃ |
| 0,8 | bis | 1,2 | " | - TiO₂ |
| 10,0 | bis | 12,0 | " | - CaO |
| 4,0 | bis | 6,0 | " | - MgO |
| 0,8 | bis | 1,5 | " | - ZnO |
| 0,2 | bis | 0,6 | " | - Na₂O+K₂O+Li₂O |
| 0,2 | bis | 0,5 | " | - CeO₂ |
| | unter | 0,5 | " | - TeO₂+HfO₂+La₂O₃ |
enthalten, wobei die Summe aller Bestandteile der Glasfaser 100 Ma.-% ergibt.

2. Glasfasern gemäß Anspruch 1, **dadurch gekennzeichnet, dass** diese weniger als 16,5 Mol-% Al₂O₃ enthalten.

3. Glasfasern gemäß Anspruch 1, **dadurch gekennzeichnet, dass** diese aus
| | | |
|---|---|---|
| 64,6 | Ma.-% | - SiO₂ |
| 16,0 | " | - Al₂O₃ |
| 1,0 | " | - TiO₂ |
| 0,1 | " | - Fe₂O₃ |
| 11,2 | " | - CaO |
| 4,8 | " | - MgO |
| 1,2 | " | - ZnO |
| 0,5 | " | - Na₂O+K₂O+Li₂O |
| 0,3 | " | - CeO₂ |
| 0,3 | " | - TeO₂+HfO₂+La₂O₃ |
bestehen.

4. Glasfasern nach einem der Ansprüche 1 bis 3, **dadurch gekennzeichnet, dass** das Massenverhältnis CeO₂ zu TeO₂+HfO₂+La₂O₃ 1:1 beträgt.

5. Glasfasern nach einem der Ansprüche 1 bis 3, **dadurch gekennzeichnet, dass** Massenverhältnis ZnO zu CeO₂ im Bereich 2 : 1 bis 6 : 1 liegt (ZnO:CeO₂ = 2:1 bis 6:1).

6. Glasfasern nach einem der Ansprüche 1 bis 5, **dadurch gekennzeichnet, dass** der Anteil an Li₂O unter 0,25 Ma.-% liegt.

7. Glasfasern nach Anspruch 1, **dadurch gekennzeichnet, dass** diese zumindest folgende chemische Beständigkeit aufweisen:
| | |
|---|---|
| Hydrolytische Beständigkeit | K1.1 (< 0, cm³ 0,01N HCl) |
| Säurebeständigkeit | K1.1 (< 0,7 mg/dm²) |
| Laugenbeständigkeit | ≤ K1.2 (< 175 mg/dm²). |

8. Glasfasern nach einem der Ansprüche 1 bis 6, **dadurch gekennzeichnet, dass** diese mit einer wässrigen Schlichte, die einen Festkörperanteil von 2,0 bis 3,0 Ma.-% enthält, bestehend aus:
a) 2,0 - 4,0 Ma.-% Polyvinylacetat-Ethylencopolymer
b) 0,3 - 0,7 Ma.-% Polyamidoamid
c) 0,1 - 0,3 Ma.-% Polyvinylalkohol-Polyether-Mischung
d) 0,1 - 0,3 Ma.-% Polyolefinwachs
e) 0,4 - 0,7 Ma.-% Haftvermittler und
f) Wasser als Rest auf 100 Ma.-%
beschlichtbar sind.

9. Verfahren zum Beschlichten einer Glasfaser, nach einem der Ansprüche 1 bis 7, und nachfolgender thermischer Behandlung, **dadurch gekennzeichnet, dass** die Glasfaser mit einer wässrigen Schlichte, die einen Festkörperanteil von 2,0 bis 3,0 Ma.-% enthält, bestehend aus:
a) 2,0 - 4,0 Ma.-% Polyvinylacetat-Ethylencopolymer
b) 0,3 - 0,7 Ma.-% Polyamidoamid
c) 0,1 - 0,3 Ma.-% Polyvinylalkohol-Polyether-Mischung
d) 0,1-0,3 Ma.-% Polyolefinwachs
e) 0,4 - 0,7 Ma.-% Haftvermittler und
f) Wasser als Rest auf 100 Ma.-%, beschlichtet wird.

10. Verfahren gemäß Anspruch 9, **dadurch gekennzeichnet, dass** die wässrige Schlichte durch einen Applikator, insbesondere eine Galette oder einen Kissenapplikator, auf die Glasoberfläche aufgebracht wird und die nachfolgende thermische Behandlung nach einer Relaxationszeit von zumindest 24 Stunden in einem Kammertrockner oder in einem Hochfrequenztrockner erfolgt.

11. Verfahren gemäß Anspruch 9, **dadurch gekennzeichnet, dass** die thermische Behandlung in einem Kammertrockner oder in einem Hochfrequenztrockner bei Temperaturen im Bereich zwischen 100 und 180°C erfolgt.

12. Verfahren nach einem der Ansprüche 9 bis 10, **dadurch gekennzeichnet, dass** diese einen Glühverlust (LOI) von 0,2 bis 0,8 Ma.-% nach der thermischen Behandlung aufweisen.

13. Beschlichtete Glasfasern hergestellt nach einem Verfahren gemäß der Ansprüche 9 bis 12.

14. Verwendung der beschlichteten Glasfasern nach Anspruch 13 als Roving oder Garn bzw. Zwirn.

## Claims

1. Thermally resistant glass fibers, **characterized in that** they contain at least
| | | | | |
|---|---|---|---|---|
| 62.0 | to | 66.0 | mass % | - SiO₂ |
| 14.0 | to | 16.4 | " | - Al₂O₃ |
| 0.8 | to | 1.2 | " | - TiO₂ |
| 10.0 | to | 12.0 | " | - CaO |
| 4.0 | to | 6.0 | " | - MgO |
| 0.8 | to | 1.5 | " | - ZnO |
| 0.2 | to | 0.6 | " | - Na₂O+K₂O+Li₂O |
| 0.2 | to | 0.5 | " | - CeO₂ |
| | less than | 0.5 | " | - TeO₂+HfO₂+La₂O₃ |
all glass fiber components adding up to 100 mass %.

2. Glass fibers according to Claim 1, **characterized in that** they contain less than 16.5 Mol % of Al₂O₃.

3. Glass fibers according to Claim 1, **characterized in that** they contain
| | | |
|---|---|---|
| 64.6 | mass % | - SiO₂ |
| 16.0 | " | - Al₂O₃ |
| 1.0 | " | - TiO₂ |
| 0.1 | " | - Fe₂O₃ |
| 11.2 | " | - CaO |
| 4.8 | " | - MgO |
| 1.2 | " | - ZnO |
| 0.5 | " | - Na₂O+K₂O+Li₂O |
| 0.3 | " | - CeO₂ |
| 0.3 | " | - TeO₂+HfO₂+La₂O₃ |

4. Glass fibers according to any of the Claims 1 through 3, **characterized in that** the mass ratio of CeO₂ to TeO₂+HfO₂+La₂O₃ is 1:1.

5. Glass fibers according to any of the Claims 1 through 3, **characterized in that** the mass ratio of ZnO to CeO₂ ranges between 2 : 1 and 6 : 1 (ZnO:CeO₂ = 2:1 to 6:1).

6. Glass fibers according to any of the Claims 1 through 5, **characterized in that** the percentage of Li₂O is lower than 0.25 mass %.

7. Glass fibers according to Claim 1, **characterized in that** they have the minimum chemical resistance below:
| | |
|---|---|
| Hydrolytic resistance | Cl.1 (< 0.1 cm³ 0.01N HCl) |
| Acid resistance | Cl.1 (< 0.7 mg/dm²) |
| Base resistance | ≤ Cl.2 (< 175 mg/dm²). |

8. Glass fibers according to any of the Claims 1 through 6, **characterized in that** they can be treated with an aqueous size comprising a solid material portion of between 2.0 and 3.0 mass % , consisting of:
a) 2.0 - 4.0 mass % of Polyvinylacetate ethylene copolymer
b) 0.3 - 0.7 mass % of Polyamidoamide
c) 0.1 - 0.3 mass % of Polyvinyl alcohol polyether mixture
d) 0.1 - 0.3 mass % of Polyolefine wax
e) 0.4 - 0.7 mass % of coupling agent, and
f) water as the balance to 100 mass %.

9. A procedure to treat the glass fiber with a size according to any of the Claims 1 through 7, and subsequent thermal treatment, **characterized in that** the glass fiber is treated with an aqueous size comprising a solid material content of between 2.0 and 3.0 mass % , consisting of:
a) 2.0 - 4.0 mass % of Polyvinylacetate ethylene copolymer
b) 0.3 - 0.7 mass % of Polyamidoamide
c) 0.1 - 0.3 mass % of Polyvinyl alcohol polyether mixture
d) 0.1 - 0.3 mass % of Polyolefine wax
e) 0.4 - 0.7 mass % of coupling agent, and
water as the balance to 100 mass %.

10. A procedure according to Claim 9, **characterized in that** the aqueous size is applied to the glass surface with an applicator, in particular a galette or a cushion applicator), and the subsequent thermal treatment is performed in a compartment drier or high-frequency drier after a minimum relaxation period of 24 hours.

11. A procedure according to Claim 9, **characterized in that** the thermal treatment is performed in a compartment drier or high-frequency drier at temperatures ranging from 100 to 180°C.

12. A procedure according to any of the Claims 9 through 10, **characterized in that** those result in a loss on ignition (LOI) of 0.2 to 0.8 mass % after thermal treatment.

13. Size-treated glass fibers produced with a procedure according to any of the Claims 9 through 12.

14. The use of the size-treated glass fibers according to Claim 13 as rovings or single or ply yarns.

## Revendications

1. Fibres de verre thermorésistantes, **caractérisées en ce qu'**elles contiennent pour le moins
| | | | |
|---|---|---|---|
| de 62,0 à | 66,0 | % m/m | - SiO₂ |
| de 14,0 à | 16,4 | " | - Al₂O₃ |
| de 0,8 à | 1,2 | " | - TiO₂ |
| de 10,0 à | 12,0 | " | - CaO |
| de 4,0 à | 6,0 | " | - MgO |
| de 0,8 à | 1,5 | " | - ZnO |
| de 0,2 à | 0,6 | " | - Na₂O+K₂O+Li₂O |
| de 0,2 à | 0,5 | " | - CeO₂ |
| moins de | 0,5 | " | - TeO₂+HfO₂+La₂O₃ |
la somme de tous les ingrédients des fibres de verre faisant 100 pour cent masse (% m/m).

2. Fibres de verre selon la revendication 1, **caractérisées en ce qu'**elles contiennent moins de 16,5 pour cent en moles de Al₂O₃.

3. Fibres de verre selon la revendication 1, **caractérisées en ce qu'**elles consistent en
| | | |
|---|---|---|
| 64,6 | % m/m | - SiO₂ |
| 16,0 | " | - Al₂O₃ |
| 1,0 | " | - TiO₂ |
| 0,1 | " | - Fe₂O₃ |
| 11,2 | " | - CaO |
| 4,8 | " | - MgO |
| 1,2 | " | - ZnO |
| 0,5 | " | - Na₂O+K₂O+Li₂O |
| 0,3 | " | - CeO₂ |
| 0,3 | " | - TeO₂+HfO₂+La₂O₃ |

4. Fibres de verre selon la revendication 1 à 3, **caractérisées en ce que** leur rapport massique entre CeO₂ et TeO₂+HfO₂+La₂O₃ est de 1:1 .

5. Fibres de verre selon la revendication 1 à 3, **caractérisées en ce que** leur rapport massique entre ZnO et CeO₂ se trouve entre 2 : 1 et 6 : 1 (ZnO:CeO₂ = de 2:1 à 6:1).

6. Fibres de verre selon la revendication 1 à 5, **caractérisées en ce que** la proportion de Li₂O est inférieur à 0,25 pour cent masse.

7. Fibres de verre selon la revendication 1, **caractérisées en ce qu'**elles possèdent une résistance chimique minimale comme suit :
| | |
|---|---|
| résistance hydrolytique | Cl.1 (< 0,1 cm³ 0,01 N HCl) |
| résistance aux acides | Cl.1 (< 0,7 mg/dm²) |
| résistance aux liquides alcalins | ≤ Cl.2 (< 175 mg/dm²). |

8. Fibres de verre selon la revendication 1 à 6, **caractérisées en ce qu'**elles ont été pourvues d'un ensimage aqueux contenant une teneur en solides de 2,0 à 3,0 % m/m, se composant de :
a) de 2,0 à 4,0 % m/m de copolymère d'éthylène-polyacétate de vinyle
b) de 0,3 à 0,7 % m/m de polyamidoamide
c) de 0,1 à 0,3 % m/m d'un mélange d'alcool polyvinylique et polyéther
d) de 0,1 à 0,3 % m/m de cire polyoléfinique
e) de 0,4 à 0,7 % m/m d'agent de pontage, et
f) de l'eau pour le reste sur 100 pour cent masse.

9. Procédé pour l'ensimage d'une fibre de verre selon la revendication 1 à 7, suivi d'un traitement thermique, **caractérisé en ce que** la fibre de verre est ensimé à un ensimage d'une teneur de 2,0 à 3,0 pour cent masse en solides, se composant de :
a) de 2,0 à 4,0 % m/m de copolymère d'éthylène-polyacétate de vinyle
b) de 0,3 à 0,7 % m/m de polyamidoamide
c) de 0,1 à 0,3 % m/m d'un mélange d'alcool polyvinylique et polyéther
d) de 0,1 à 0,3 % m/m de cire polyoléfinique
e) de 0,4 à 0,7 % m/m d'agent de pontage, et
g) de l'eau pour le reste sur 100 pour cent masse.

10. Procédé selon la revendication 9, **caractérisé en ce que** l'ensimage aqueux est appliqué sur la surface de verre en utilisant un applicateur, en particulier une galette ou un applicateur coussin, le traitement thermique postérieur se réalisant dans un séchoir à compartiment ou dans in séchoir à micro-ondes après une durée de relaxation d'au minimum 24 heures.

11. Procédé selon la revendication 9, **caractérisé en ce que** le traitement thermique dans un séchoir à compartiment ou dans in séchoir à micro-ondes se réalise sous une température entre 100 et 180 °C.

12. Procédé selon la revendication 9 à 10, **caractérisé en ce que** celles-ci présentent une perte au feu (LOI) de 0,2 à 0,8 pour cent masse après le traitement thermique.

13. Fibres de verre ensimées, produites avec un procédé selon les revendications 9 à 12.

14. Utilisation des fibres de verre ensimées selon la revendication 13 comme stratifil de verre textile ou fil ou retors.
